(19) Europäisches Patentamt
European Patent Office
Office européen des brevets

(11) **EP 2 946 695 B1**

(12) **EUROPÄISCHE PATENTSCHRIFT**

(45) Veröffentlichungstag und Bekanntmachung des Hinweises auf die Patenterteilung:
**22.03.2017  Patentblatt 2017/12**

(51) Int Cl.:
**A47C 7/46** (2006.01)   **B60N 2/66** (2006.01)

(21) Anmeldenummer: **15167242.5**

(22) Anmeldetag: **12.05.2015**

(54) **LORDOSENSTÜTZE**

LUMBAR SUPPORT

SOUTIEN DE LORDOSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.05.2014  DE 202014102360 U**

(43) Veröffentlichungstag der Anmeldung:
**25.11.2015  Patentblatt 2015/48**

(73) Patentinhaber: **Schwarzbich, Jörg**
**33615 Bielefeld (DE)**

(72) Erfinder: **Schwarzbich, Jörg**
**33615 Bielefeld (DE)**

(74) Vertreter: **Ter Meer Steinmeister & Partner Patentanwälte mbB**
**Artur-Ladebeck-Strasse 51**
**33617 Bielefeld (DE)**

(56) Entgegenhaltungen:
**EP-A1- 0 518 830      WO-A1-2006/105989**
**US-A1- 2004 108 760      US-B1- 6 692 074**

**Beschreibung**

Die Erfindung betrifft eine Lordosenstütze für Sitzrückenlehnen, mit einer Stützplatte, die mit Zuggliedern zwischen zwei Rahmenschenkeln der Rückenlehne gehalten ist und auf jeder Seite mindestens einen Angriffspunkt für das jeweilige Zugglied aufweist, und mit einer Stelleinrichtung zum Einstellen der Zugspannung der Zugglieder.

Solche Lordosenstützen (siehe z.B. WO-A-2006/105989) sind beispielsweise in den Rückenlehnen von Kraftfahrzeugsitzen vorgesehen und dienen dazu, die Wirbelsäule des Benutzers im Bereich der Lendenwirbel so abzustützen, dass eine gesunde Sitzhaltung erreicht wird. Die vom Benutzer auf die Stützplatte ausgeübte Kraft führt dazu, dass die Stützplatte zurückgedrückt wird und in eine Position gelangt, in der sie gegenüber der Ebene der Rahmenschenkel zurück liegt. Wenn nun mit der Stelleinrichtung die Zugspannung der Zugglieder erhöht wird, so wird die Stützplatte näher an die Ebene der Rahmenschenkel herangezogen, so dass sie der Kraft des Benutzers weniger nachgibt und dementsprechend eine stärke Stützwirkung entfaltet.

Bei bekannten Lordosenstützen dieser Art wird die Zugspannung der Zugglieder dadurch erhöht, dass die wirksame Länge der Zugglieder reduziert wird.

Zum Beispiel beschreibt EP 1 190 127 B1 eine Lordosenstütze der oben genannten Art, bei der die Zugglieder als flexible Kabel ausgebildet sind, die etwa in der Mitte der Stützplatte in eine Richtung parallel zu den Rahmenschenkeln umgelenkt werden. Die Enden dieser Kabel sind mit einem gemeinsamen Verbindungsnippel verbunden, der sich mit Hilfe der Stelleinrichtung in der Richtung parallel zu den Rahmenschenkeln verstellen lässt, wodurch sich die effektive Länge der Kabel verändert.

Aufgabe der Erfindung ist es, eine Lordosenstütze zu schaffen, bei der sich die Stützkraft einfacher einstellen lässt.

Diese Aufgabe wird erfindungsgemäß dadurch gelöst, dass der Abstand zwischen den Angriffspunkten verstellbar ist und die Stelleinrichtung dazu ausgebildet ist, diesen Abstand zu verändern.

Wenn die Zugglieder gespannt gehalten sind und demzufolge geradlinig verlaufen, so bilden die beiden Zugglieder die schrägen Seiten eines Trapezes, dessen kleinere Grundseite durch die Verbindungsstrecke zwischen den beiden Angriffspunkten gebildet wird. Wenn man nun mit Hilfe der Stelleinrichtung den Abstand zwischen den Angriffspunkten verringert, also die Verbindungsstrecke zwischen ihnen verkürzt, so vergrößert sich entsprechend der Abstand, den jedes Zugglied zum Rahmenschenkel überbrücken muss. Wenn die Länge der Zugglieder unverändert bleibt, kann diese Vergrößerung des Abstands nur dadurch ausgeglichen werden, dass die Zugglieder eine gestrecktere Position einnehmen, in der sie mit der Stützplatte einen kleineren Winkel bilden, so dass die Stützplatte näher an die durch die Rahmenschenkel definierte Ebene heranrückt.

In einer anderen Ausführungsform ist es jedoch auch möglich, dass die Länge der Zugglieder ihrerseits variabel ist. Beispielsweise können die beiden Zugglieder durch ein durchgehendes Kabel gebildet werden, das sich von einen Rahmenschenkel über die beiden Angriffspunkte der Stützplatte zum gegenüberliegenden Rahmenschenkel erstreckt und an den Angriffspunkten nicht fest verankert, sondern lediglich umgelenkt wird. Wenn man dann den Abstand zwischen den Angriffspunkten verringert, so nimmt die Länge der Zugglieder zu, da die Gesamtlänge des Kabels konstant bleibt. Die größere Länge der Zugglieder im Verhältnis zu der Verbindungsstrecke zwischen den Angriffspunkten ermöglicht es in diesem Fall, dass die Stützplatte weiter von der Ebene der Rahmenschenkel abrücken kann, die Lordosenstütze also nachgiebiger wird.

In beiden Fällen besteht ein Vorteil darin, dass die von der Stelleinrichtung zu erzeugende Relativbewegung der Angriffspunkte in der Richtung rechtwinklig zu den Rahmenschenkeln erfolgt. Wenn die Stelleinrichtung aus Gründen der guten Erreichbarkeit und Bedienbarkeit, wie üblich, seitlich an der Rückenlehne angeordnet ist, kann folglich die Stelleinrichtung so ausgebildet sein, dass sie beiden Angriffspunkte auseinanderzieht oder zusammendrückt, ohne dass die Kraft der Stelleinrichtung in eine andere Richtung umgelenkt werden muss. Das ermöglicht eine Verringerung des Reibungswiderstands und somit eine leichtere Bedienbarkeit der Stelleinrichtung. Darüber hinaus ermöglicht die Erfindung eine deutlich vereinfachte Herstellung der Lordosenstütze.

Vorteilhafte Ausgestaltungen und Weiterbildungen sind in den Unteransprüchen angegeben.

Im folgenden werden Ausführungsbeispiele anhand der Zeichnung näher erläutert.

Es zeigen:

Fig. 1        eine schematische Ansicht einer Lordosenstütze zwischen zwei Rahmenschenkeln einer Sitzrückenlehne;

Fig. 2        einen Schnitt längs der Linie II-II in Fig. 1;

Fig. 3        eine Ansicht entsprechend Fig. 1, jedoch für eine andere Einstellposition der Lordosenstütze;

Fig. 4        einen Schnitt längs der Linie IV-IV in Fig. 3; und

Fig. 5 und 6   Prinzipskizzen einer Lordosenstütze gemäß einem anderen Ausführungsbeispiel in zwei verschiedenen Einstellpositionen.

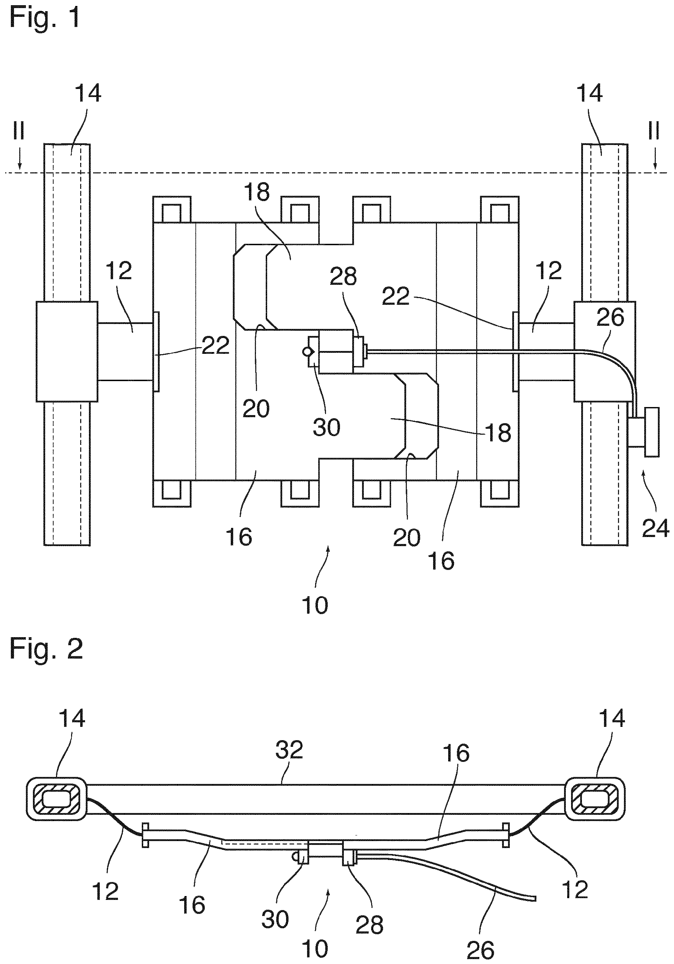

Die in Fig. 1 gezeigte Lordosenstütze weist eine Stützplatte 10 auf, die mit zwei Zuggliedern 12 in der Form flexibler Bänder zwischen zwei parallelen Rahmenschenkeln 14 einer Sitzrückenlehne gehalten ist. Die Stützplatte 10 ist beispielsweise im Spritzgießverfahren aus Kunststoff hergestellt und ist aus zwei formidentischen Halbplatten 16 zusammengesetzt, die verschiebbar miteinander in Eingriff stehen und in um 180° gegeneinander verdrehten Orientierungen zusammengesteckt sind. Dazu weist jede Halbplatte eine vorspringende Zunge 18 auf, die verschiebbar in einem dazu komplementären Schacht 20 in der jeweiligen anderen Halbplatte geführt ist.

An den voneinander abgewandten Rändern weisen die Halbplatten 16 jeweils einen Angriffspunkt 22 für das zugehörige Zugglied 12 auf. Dieser Angriffspunkt 22 wird beispielsweise durch eine schlitzartige Struktur gebildet, in der eine entsprechende Verdickung des Zuggliedes 12 formschlüssig verankert ist.

An einer Seite der Sitzrückenlehne, im gezeigten Beispiel am rechten Rahmenschenkel 14, ist eine an sich bekannte Stelleinrichtung 24 zum Verstellen der Lordosenstütze angeordnet. Die Verstelleinrichtung weist einen Bowdenzug 26 auf, dessen Außenkabel sich an einem Widerlager 28 der einen Halbplatte 16 abstützt, während das Innenkabel an einem Widerlager 30 der anderen Halbplatte verankert ist.

Wenn der Rücken des Benutzers über die nicht gezeigte Polsterung der Sitzrückenlehne eine Kraft auf die Stützplatte 10 ausübt, so erlaubt die Flexibilität der Zugglieder 12 ein gewisses Nachgeben der Stützplatte, wie in Fig. 2 gezeigt ist. Die Hauptebene der Stützplatte 10 ist deshalb gegenüber der von den Rahmenschenkeln 14 aufgespannten Ebene etwas parallel versetzt (in Fig. 2 nach unten). Die Zugglieder 12 stehen unter Zugspannung und haben deshalb die Tendenz, die beiden Halbplatten der Stützplatte 16 auseinander zu ziehen. Die Auszugsbewegung wird jedoch durch den Bowdenzug 26 verhindert, so dass die Stützplatte 10 nicht weiter nachgeben kann und somit eine Stützwirkung auf den Rücken des Benutzers ausübt.

Da die Stützplatte 10 in diesem Ausführungsbeispiel lediglich Zugkräften ausgesetzt ist, die die Tendenz haben, die beiden Halbplatten auseinander zu ziehen, brauchen die Stelleinrichtung 24 und der Bowdenzug 26 nur so gestaltet zu sein, dass sie diese Zugkräfte auffangen. Das Innenkabel des Bowdenzuges 26 braucht folglich in diesem Ausführungsbeispiel keine Schubkräfte zu übertragen.

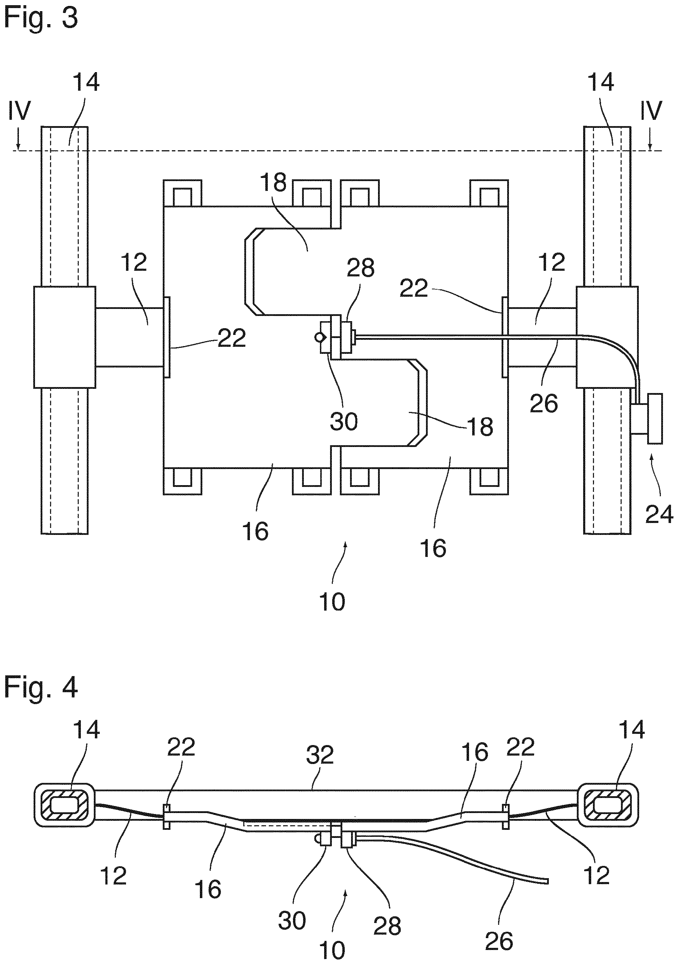

Wenn der Benutzer die Lordosenstütze "härter" einstellen möchte, so zieht er mit Hilfe der Stelleinrichtung 24 und des Bowdenzuges 26 die beiden Halbplatten 16 enger zusammen, wie in Fig. 3 und 4 gezeigt ist. Dadurch verringert sich der Abstand zwischen den beiden Angriffspunkten 22, und auf die Zugglieder 12 wirkt eine zusätzliche Zugspannung, die bewirkt, dass die Stützplatte näher an die durch die Rahmenschenkel 14 definierte Ebene herangezogen wird.

Lediglich zu Vergleichszwecken ist in Fig. 2 und 4 noch ein unterer Rahmenschenkel 32 der Rückenlehne gezeigt, der als Referenz für die Position der Stützplatte 10 dienen kann und es so erleichtert, die unterschiedlichen Positionen der Stützplatte in Fig. 2 und 4 zu erkennen.

Ein Vorteil der hier beschriebenen Anordnung besteht darin, dass die Relativbewegung zwischen den beiden Halbplatten 16 der Stützplatte in waagerechter Richtung stattfindet, also in der Richtung, in der auch der Bowdenzug 26 in das Innere der Rückenlehne eintritt. Die Kraft des Bowdenzuges kann deshalb unmittelbar in die Halbplatten 16 eingeleitet werden, ohne dass eine Umlenkung oder Änderung der Wirkrichtung stattfinden muss. Die Zugglieder 12 können einfach durch kurze Bänder oder ggf. auch angespritzte Filmscharniere aus Kunststoff gebildet werden, die jeweils mit einem Ende fest an einer Halbplatte 16 und mit dem anderen Ende fest am Rahmenschenkel 14 verankert sind.

Die Konstruktion ist selbstzentrierend, d.h., die Stützplatte 10 befindet sich stets in der Mitte zwischen den beiden Rahmenschenkeln 14, unabhängig von der jeweiligen Einstellung des Bowdenzuges 26. Außerdem erleichtert es die Erfindung, die Stützplatte in der jeweils gewünschten Höhe zwischen den Rahmenschenkeln 14 anzuordnen, wobei ggf. auch eine Möglichkeit zur Höhenverstellung vorgesehen werden kann.

Die beiden praktisch formidentischen Halbplatten 16 der Stützplatte können rationell in demselben Spritzgießwerkzeug hergestellt werden.

Üblicherweise hat die Stützplatte 10 die Form eines leicht geschwungenen Korbes, der auf der dem Benutzer zugewandten Seite konkav ist. Bei der hier gezeigten Lösung variiert mit dem Abstand zwischen den Angriffspunkten 22 auch die Breite der Stützplatte. Wenn die Lordosenstütze weich eingestellt ist, wie in Fig. 2, hat die Stützplatte eine größere Breite. Dennoch erhält der Benutzer eine gute Seitenführung, da das Gesamtgebilde aus Stützplatte 10 und Zuggliedern 12 in diesem Zustand eine tiefe Mulde für den Rücken des Benutzers bildet. Wenn dagegen die Lordosenstütze härter eingestellt ist, wie in Fig. 4, rücken die beiden Halbplatten enger zusammen und das Relief der Stützplatte wird schmaler, so dass die Wirbelsäule des Benutzers immer noch eine gute Seitenführung erhält, obgleich die Lordosenstütze in diesem Zustand nicht so eine tiefe Mulde bildet.

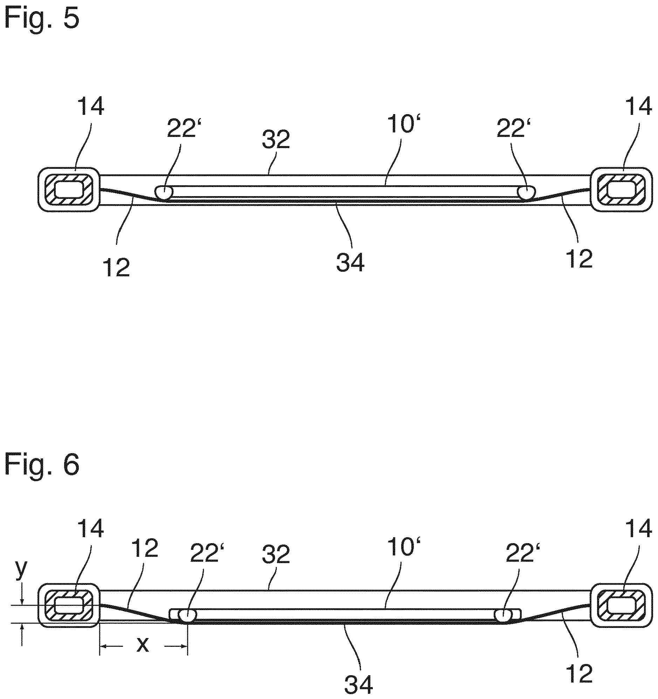

Statt die Stützplatte 10 zweiteilig auszubilden, ist es in einer anderen Ausführungsform auch möglich, lediglich die Angriffspunkte 22 verstellbar an einer einteiligen Stützplatte anzuordnen. Ein Beispiel für diese Variante ist in Fig. 5 und 6 gezeigt. Die Zugglieder 12 werden hier durch ein durchgehendes Kabel 34 gebildet, das eine konstante Länge hat und sich von einem Rahmenschenkel 14 zum anderen erstreckt. Gegebenenfalls können auch mehrere solche Kabel 34 in unterschiedlichen Höhen vorgesehen sein. Eine einteilige Stützplatte 10' stützt sich mit ihren linken und rechten seitlichen Rändern an dem Kabel 34 ab und bewirkt so eine trapezförmige Auslenkung dieses Kabels. Angriffspunkte 22' für die Zugglieder 12 werden in diesem Fall durch in vertikaler Richtung (senkrecht zur Zeichenebene in Fig. 5) langgestreckte Leisten gebildet, die auf der Rückseite der Stützplatte, also auf der dem Kabel 34 zugewandten Seite, einen leicht erhabenen Wulst bilden, an dem das Kabel umgelenkt wird. Die beiden Angriffspunkte 22' sind verschiebbar in der Stützplatte 10' geführt, so dass sich mit Hilfe einer hier nicht näher gezeigten Stelleinrichtung der Abstand zwischen ihnen variieren lässt, wie ein Vergleich der Figuren 5 und 6 zeigt.

Eine Verringerung des Abstands zwischen den Angriffspunkten 22' bewirkt nun allerdings, da das Kabel 34 insgesamt eine konstante Länge hat, eine entsprechende Verlängerung der Zugglieder 12. In Fig. 6 sind auf der linken Seite zwei Stecken x und y eingetragen, die zusammen mit dem Zugglied 12 ein rechtwinkliges Dreieck bilden. Wenn die Länge des Zuggliedes 12 mit z bezeichnet wird, so gilt nach dem Satz des Pythagoras:

$$y^2 = z^2 - x^2.$$

Wenn nun die Angriffspunkte 22' um eine Distanz d nach innen rücken, so ist die Größe x zu ersetzen durch x + d. Der mittlere Teil des Kabels 34 zwischen den Angriffspunkten 22' verkürzt sich um 2d, und das wird dadurch ausgeglichen, dass sich jedes Zugglied um d verlängert. Also ist z zu ersetzen durch z + d, und man erhält:

$$y^2 = (z + d)^2 - (x + d)^2 = z^2 - x^2 + 2d(z - x).$$

Da z größer ist als x, bedeutet dies, dass $y^2$ proportional zu d zunimmt. Also wird y proportional zu der Wurzel aus d größer. Da y den Abstand zwischen der Ebene der Rahmenschenkel 14 und der Ebene der Stützplatte 10' angibt, bedeutet das, dass sich die Stützplatte 10 weiter von der Ebene der Rahmenschenkel entfernt, die Lordosenstütze also nachgiebiger wird.

**Patentansprüche**

1. Lordosenstütze für Sitzrückenlehnen, mit einer Stützplatte (10; 10'), die mit Zuggliedern (12) zwischen zwei Rahmenschenkeln (14) der Rückenlehne gehalten ist und auf jeder Seite mindestens einen Angriffspunkt (22; 22') für das jeweilige Zugglied (12) aufweist, und mit einer Stelleinrichtung (24) zum Einstellen der Zugspannung der Zugglieder (12), **dadurch gekennzeichnet, dass** der Abstand zwischen den Angriffspunkten (22; 22') verstellbar ist und die Stelleinrichtung (24) dazu ausgebildet ist, diesen Abstand zu verändern.

2. Lordosenstütze nach Anspruch 1, bei der die Stützplatte (10) zwei gegeneinander verschiebbare Halbplatten (16) aufweist, an denen jeweils einer der Angriffspunkte (22) angeordnet ist.

3. Lordosenstütze nach Anspruch 2, bei der jedes der Zugglieder (12) fest an seinem Angriffspunkt (22) verankert ist.

4. Lordosenstütze nach Anspruch 2 oder 3, bei der die beiden Halbplatten (16) formidentisch sind.

5. Lordosenstütze nach Anspruch 4, bei der die beiden Halbplatten (16) jeweils mindestens eine Zunge (18) aufweisen, die verschiebbar in einem Schacht (20) der anderen Halbplatte geführt ist.

6. Lordosenstütze nach einem der Ansprüche 2 bis 5, bei der die Stelleinrichtung (24) einen Bowdenzug (26) aufweist, der in der Richtung, in der die Halbplatten (16) gegeneinander verschiebbar sind, zu der Stützplatte (10) verläuft und dessen Außenkabel an einem Widerlager (28) einer der Halbplatten (16) abgestützt ist und dessen Innenkabel an einem Widerlager (30) der anderen Halbplatte (16) abstützt ist.

7. Lordosenstütze nach Anspruch 6, bei der das Innen- und Außenkabel des Bowdenzuges (26) so an den Halbplatten (16) angreifen, dass diese zusammengezogen werden, wenn auf das Innenkabel eine Zugkraft wirkt.

8. Lordosenstütze nach Anspruch 1, bei der die beiden Angriffspunkte (22') beweglich an einer einteiligen Stützplatte (10') angeordnet sind.

9. Lordosenstütze nach Anspruch 8, bei der die Zugglieder (12) durch Abschnitte eines Kabels (34) gebildet werden, das sich durchgehend von einem Rahmenschenkel (14) zum anderen erstreckt und verschiebbar über die Angriffspunkte (22') geführt ist, an denen es so umgelenkt wird, dass es in der Richtung parallel zu den Rahmenschenkeln (14) gesehen eine trapezförmige Konfiguration annimmt.

## Claims

1. A lordosis support for seat back rests, comprising a support plate (10; 10') held between two frame legs (14) of the back rest by means of tension members (12) and having on each side at least one point of attack (22; 22') for the respective tension member (12), and an adjusting device (24) for adjusting the tension force of the tension members (12), **characterized in that** the distance between the two points of attack (22; 22') is adjustable and the adjusting device (24) is configured to change this distance.

2. The lordosis support according to claim 1, wherein the support plate (10) has two half-plates (16) that are displaceable relative to one another, and one point of attack (22) is provided on each of the half-plates.

3. The lordosis support according to claim 2, wherein each of the tension members (12) is firmly anchored at its point of attack (22).

4. The lordosis support according to claim 2 or 3, wherein the two half-plates (16) have identical shapes.

5. The lordosis support according to claim 4, wherein each of the two half-plates (16) has at least one tongue (18) that is displaceably guided in a duct (20) of the other half-plate.

6. The lordosis support according to any of the claims 2 to 5, wherein the adjusting device (24) has a Bowden cable (26) which passes to the support plate (10) in the direction in which the half-plates (16) are displaceable relative to one another, an outer cable of the Bowden cable being supported at a counter bearing (28) of one of the half-plates (16), and an inner wire of the Bowden cable being supported at a counter bearing (30) of the other half-plate (16).

7. The lordosis support according to claim 6, wherein the inner wire and the outer cable of the Bowden cable (26) are in engagement with the half-plate (16) so as to draw these half-plates together when the inner wire is put under tension.

8. The lordosis support according to claim 1, wherein the two points of attack (22') are moveably arranged at a one-piece support plate (10').

9. The lordosis support according to claim 8, wherein the tension members (12) are formed by sections of a cable (34) that extends continuously from one frame leg (14) to the other and is slidably guided over the points of attack (22) at which is deflected such that it assumes a trapezoid-shaped configuration when seen in a direction in parallel with the frame legs (14).

## Revendications

1. Soutien de lordose pour un dossier de siège, comportant une plaque de support (10 ; 10') maintenue par des éléments de tension (12) entre deux branches d'armature (14) du dossier et comportant de chaque côté au moins un point d'attaque (22 ; 22') pour l'élément de tension (12) respectif, et un dispositif de réglage (24) pour régler la force de tension des éléments de tension (12), **caractérisé en ce que** la distance entre les points d'attaque (22 ; 22') est réglable et le dispositif de réglage (24) est conçu de manière à faire varier cette distance.

2. Soutien de lordose selon la revendication 1, dans lequel la plaque de support (10) comporte deux demi-plaques (16) mobiles l'une par rapport à l'autre, sur lesquelles est respectivement agencé l'un des points d'attaque (22).

3. Soutien de lordose selon la revendication 2, dans lequel chacun des éléments de tension (12) est fixement ancré à son point d'attaque (22).

4. Soutien de lordose selon la revendication 2 ou 3, dans lequel les deux demi-plaques (16) sont de forme identique.

**5.** Soutien de lordose selon la revendication 4, dans lequel les deux demi-plaques (16) comportent respectivement au moins une languette (18) qui est guidée de manière mobile dans une rainure (20) de l'autre demi-plaque.

**6.** Soutien de lordose selon l'une des revendications 2 à 5, dans lequel le dispositif de réglage (24) comporte un câble Bowden (26) qui, dans la direction dans laquelle les demi-plaques (16) sont mobiles l'une par rapport à l'autre, s'étend jusqu'à la plaque de support (10) et dont le câble extérieur est supporté par un contre-palier (28) de l'une des demi-plaques (16) et dont le câble intérieur est supporté par un contre-palier (30) de l'autre demi-plaque (16).

**7.** Soutien de lordose selon la revendication 6, dans lequel le câble intérieur et le câble extérieur du câble Bowden (26) agissent sur les demi-plaques (16) de sorte que celles-ci sont tirées conjointement lorsqu'une force de tension agit sur le câble intérieur.

**8.** Soutien de lordose selon la revendication 1, dans lequel les deux points d'attaque (22') sont agencés de manière mobile sur une plaque de support monobloc (10').

**9.** Soutien de lordose selon la revendication 8, dans lequel les éléments de tension (12) sont formés par des parties d'un câble (34) qui s'étend de manière continue d'une branche d'armature (14) jusqu'à l'autre et est guidé de manière mobile par l'intermédiaire des points d'attaque (22') au niveau desquels il est dévié de telle sorte qu'il prend une configuration trapézoïdale lorsqu'il est vu dans la direction parallèle aux branches d'armature (14).

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006105989 A

- EP 1190127 B1